Europäisches Patentamt

European Patent Office

Office européen des brevets

(19)

(11) Veröffentlichungsnummer : **0 023 724**
**B1**

(12) # EUROPÄISCHE PATENTSCHRIFT

(45) Veröffentlichungstag der Patentschrift :
21.03.84

(51) Int. Cl.³ : **A 47 J 27/62, G 05 D 23/19**

(21) Anmeldenummer : **80104650.9**

(22) Anmeldetag : **06.08.80**

(54) Dampfdruckkochtopf mit einer Einrichtung zum Steuern der Koch- bzw. Garzeit.

(30) Priorität : **07.08.79 DE 2932039**

(43) Veröffentlichungstag der Anmeldung :
**11.02.81 Patentblatt 81/06**

(45) Bekanntmachung des Hinweises auf die Patenterteilung : **21.03.84 Patentblatt 84/12**

(84) Benannte Vertragsstaaten :
**AT CH FR GB IT LI NL SE**

(56) Entgegenhaltungen :
**DE-A- 1 465 031**
**FR-A- 1 413 551**
**GB-A-    936 050**
**US-A- 3 326 692**
**US-A- 3 979 056**

(73) Patentinhaber : **WÜRTTEMBERGISCHE METALLWA-
RENFABRIK AG.**
**Postfach 76**
**D-7340 Geislingen/Steige (DE)**

(72) Erfinder : **Mayer, Rolf, Dipl.-Ing.**
**Schlosshalde 12**
**D-7340 Geislingen/Steige (DE)**

(74) Vertreter : **Patentanwälte Dipl.-Ing. A. Grünecker,
Dr.-Ing. H. Kinkeldey, Dr.-Ing. W. Stockmair,
Dr. rer. nat. K. Schumann, Dipl.-Ing. P.H. Jakob, Dr.
rer. nat. G. Bezold Maximilianstrasse 58
D-8000 München 22 (DE)**

EP 0 023 724 B1

Dampfdruckkochtopf mit einer Einrichtung zum Steuern der Koch- bzw. Garzeit

Die Erfindung bezieht sich auf einen Dampfdruckkochtopf gemäß dem Oberbegriff des Anspruchs 1.

Bei den durch Vorbenutzung bekannten Dampfdruckkochtöpfen erfolgt gegenwärtig die Steuerung des Garprozesses manuell. Beim Ansprechen des Druckanzeigers schaltet die Hausfrau gewöhnlich die Heizplatte auf eine kleinere Stufe und schaut gleichzeitig entweder auf die Uhr bzw. stellt einen Kurzzeitwecker ein. Durch die Restwärme in der Heizplatte steigt jedoch der Druck noch weiter an, um dann wieder auf seinen Sollwert zurückzugehen bzw. bei zu weit zurückgestellter Heizplatte unter den Sollwert abzufallen.

Beim Garen in einem Dampfdruckkochtopf ist jedoch die genaue Zeiteinhaltung wichtiger als beim üblichen Kochen. Je nach Temperatur bzw. Druckhöhe im Dampfdruckkochtopf gart die Speise schneller oder langsamer. Die Garzeit nimmt exponential mit der Druck- bzw. Temperaturerhöhung ab. Temperaturschwankungen während des Dampfdruckkochens wirken sich also wesentlich stärker auf die Garzeit aus, als dies beim Kochen unter normalem Luftdruck der Fall ist.

Die Hausfrau hat bei Dampfdruckkochtöpfen weiterhin keine Möglichkeit, wie beim normalen Kochen durch Augenschein oder durch Probieren, die gewünschte Garungsstufe einzuhalten. Sie muß vielmehr zunächst den Dampfdruckkochtopf abkühlen, bevor er geöffnet und sein Inhalt geprüft werden kann. Hat die Energiezufuhr nicht ausgereicht, so muß der Dampfdruckkochtopf nochmals verschlossen und wieder aufgeheizt werden. Der Solldruck muß eingeregelt und die Restgarzeit abgeschätzt werden.

Eine irgendwie geartete automatische Garzeitsteuerung ist für Dampfdruckkochtöpfe nicht bekannt.

In der US-A-3 979 056 wird eine Garzeitsteuerung in einer Friteuse beschrieben. Derartige Friteusen werden in Restaurants oder Imbißbetrieben verwendet. Sie arbeiten bei Atmosphärendruck und mit einer bestimmten, im wesentlichen konstant zu haltenden Temperatur des Bratfettes (ca. 165 °C). Diese Friteuse arbeitet folgendermaßen : nach dem Anschalten wird das Pratfett zunächst aufgeheizt, bis der Temperaturfühler das Erreichen der gewünschten Temperatur durch Einschalten eines optischen Signales anzeigt. Erst dann werden die zu fritierenden Lebensmittel in das Bratfett eingebracht und der entsprechende Wahlknopf gedrückt. Daraufhin beginnt die Steuerung zu arbeiten, wobei durch den Temperatursensor Impulse ausgelöst, diese summiert und mit der durch den Wählknopf vorgegebenen Impulsmenge verglichen werden. Es geht demnach bei dieser Steuerung im wesentlichen darum, den durch unterschiedliche Mengen und durch unterschiedliche Temperaturen der manchmal gefrorenen Lebensmittel bewirkten Temperaturabfall im Bratfett nach dem Eintauchen dieser Lebensmittel bei der Bestimmung der Garzeit zu berücksichtigen.

In der FR-A-1 413 551 wird ein Zeitrelais beschrieben, das bevorzugt für Eierkocher verwendet wird. Mit dieser Vorrichtung sollen etwa die gleichen Probleme gelöst werden, wie in der US-A-3 979 056, d. h. die Garzeit soll entsprechend der Anfangstemperatur des Wassers, der zugeführten Wärmemenge und der Menge bzw. der Größe der eingelegten Eier geregelt werden.

Auch die DE-A-2 141 784 betrifft keinen Dampfdruckkochtopf. Bei der dort beschriebenen Zeitenstellvorrichtung bleibt die vorgewählte Kochbzw. Garzeit konstant. Sie beginnt mit dem Zeitpunkt des Erreichens der Grenztemperatur und endet, unabhängig von den im Kochgefäß herrschenden Druck- bzw. Temperaturverhältnissen, mit dem Ablauf der durch ein Zeitglied vorgegebenen Zeitspanne. Dieses Zeitglied ist während des Ablaufs nicht beeinflußbar.

Der Erfindung liegt daher die Aufgabe zugrunde, einen Dampfdruckkochtopf so auszugestalten, daß die sich während des Kochens bzw. Garens im Gefäß ändernden Druck- bzw. Temperaturverhältnisse berücksichtigt werden.

Diese Aufgabe wird durch die kennzeichnenden Merkmale des Anspruchs 1 gelöst.

Bei dem erfindungsgemäßen Dampfdruckkochtopf wird bei Abweichungen von der Grenztemperatur selbsttätig in den Ablauf des Zeitgliedes eingegriffen und dadurch die Koch- bzw. Garzeit automatisch so verändert, daß die tatsächlich im Kochgefäß herrschenden Druckbzw. Temperaturverhältnisse berücksichtigt werden.

Normalerweise erfolgt dieser Eingriff so, daß das Zeitglied um so schneller abläuft, je höher der Druck bzw. die Temperatur im Kochgefäß über der Grenztemperatur liegen, und umgekehrt.

Eine bevorzugte Ausführungsform ist in Anspruch 2 angegeben. Durch Verwendung eines Integrators, der über den zeitlichen Verlauf der Temperatur bzw. des Drucks integriert, werden alle zeitlichen Änderungen der Temperatur bzw. des Druckes während des gesamten Gar- bzw. Kochvorgangs berücksichtigt.

Anspruch 3 gibt ein vorteilhaftes Ausführungsbeispiel für ein elektrisch realisiertes Zeitglied an. Der NTC-Widerstand läßt sich auch leicht an geeigneten Stellen, an denen die Temperatur zu messen ist, anbringen.

Eine bevorzugte Ausführungsform ist im Anspruch 4 angegeben. Ein dafür brauchbarer Signalgenerator, der ein Ausgangssignal abgibt, dessen Frequenz von der Größe des Eingangssignals abhängt, ist unkompliziert herzustellen und am Dampfdruckkochtopf anzubringen.

Zum Einstellen der durch den Temperatur- bzw. Druckverlauf zu korrigierenden Normalzeit geben die Ansprüche 5 und 6 günstige Lösungen an.

Während in der Ausführungsform nach Anspruch 5 der Signalgenerator selbst durch ein Einstellglied betätigt wird, das dessen Grundfrequenz festlegt, wird in der Ausführungsform nach Anspruch 6 der Signalgenerator nur in Abhängigkeit vom Signal aus dem Temperatur- bzw. Drucksensor gesteuert, während der daran angeschlossene Zähler durch ein solches Einstellglied auf einen Zählerstand voreinstellbar ist, bei dessen Erreichen ein Ausgangssignal abgegeben wird.

Die Weiterbildung nach Anspruch 7 nimmt darauf Rücksicht, daß der Aufheizvorgang nicht in die voreingestellte Zeit eingeht. Durch den angegebenen Schwellwertschalter wird das Zeitglied erst dann betätigt, wenn eine vorgegebene Mindesttemperatur oder ein bestimmter Mindestdruck erreicht ist.

Anhand von in der Zeichnung dargestellten Ausführungsbeispielen wird die Erfindung im folgenden näher erläutert. Es zeigen:

Figur 1 ein Blockschaltbild einer ersten erfindungsgemäßen Ausführungsform;

Figur 2 ein zweites Ausführungsbeispiel, bei dem gegenüber dem Ausführungsbeispiel nach Fig. 1 die Grundzeit an einem Signalgenerator eingestellt wird;

Figur 3 ein drittes weitgehend dem Ausführungsbeispiel nach Fig. 2 entsprechendes Ausführungsbeispiel, bei dem der Signalgeber nicht nur das Ende des Koch- bzw. Garvorgangs, sondern auch den am Ende herrschenden Druck bzw. die Temperatur wiedergibt, und

Figur 4 eine schematische Darstellung eines Dampfdruckkochtopfes mit eingebautem Signalgeber.

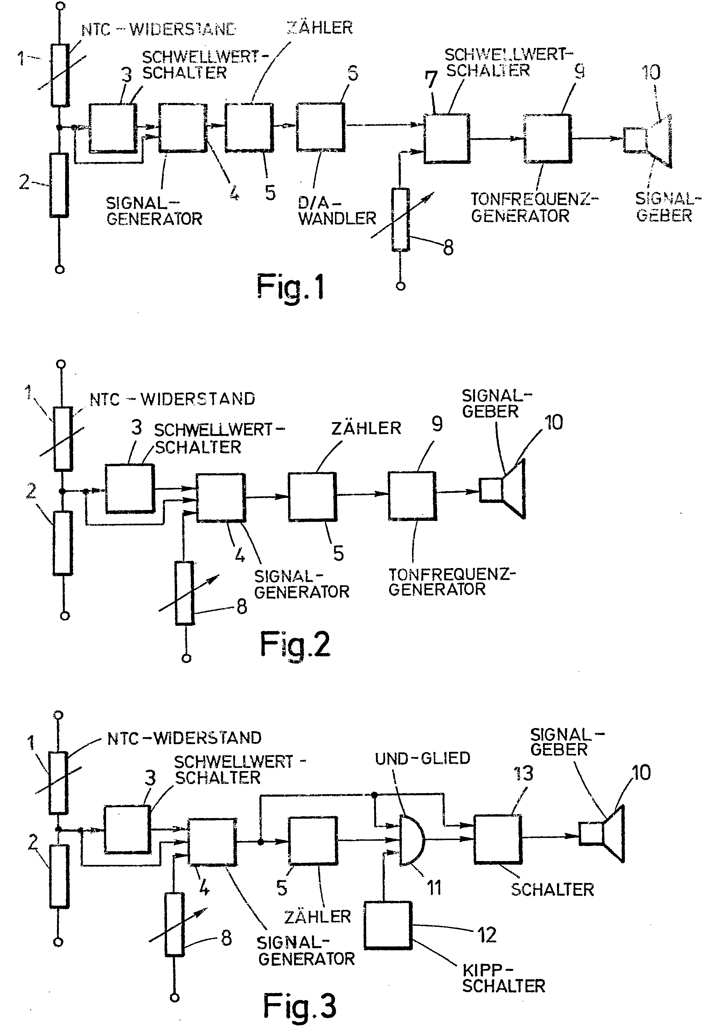

Das Ausführungsbeispiel nach Fig. 1 weist einen Temperaturfühler 1 in Form eines NTC-Widerstandes auf, der an ein Widerstandsnetzwerk, beispielsweise eine Brückenschaltung angeschlossen ist, von dem lediglich der Widerstand 2 dargestellt ist. An dem gemeinsamen Verbindungspunkt zwischen dem Temperaturfühler 1 und dem Widerstand 2 sind ein Schwellwertschalter 3 und der eine Steuereingang eines Signalgenerators 4 angeschlossen. Der zweite Steuereingang des Signalgenerators 4 ist mit dem Ausgang des Schwellwertschalters 3 verbunden. An den Signalgenerator 4 schließt sich ein Zähler 5 an, dessen Ausgang mit einem DA-Wandler (Digitalanalogwandler) 6 verbunden ist. Der Ausgang des DA-Wandlers ist mit dem einen Eingangsanschluß eines Schwellwertschalters 7 verbunden, dessen zweiter Eingangsanschluß an ein Potentiometer 8 angeschlossen ist. Der Ausgang des zweiten Schwellwertschalters 7 ist ausgangsseitig mit dem Eingang eines Tonfrequenzgenerators 9 verbunden, dessen Ausgang seinerseits an einen Signalgeber 10 angeschlossen ist.

Der erste Schwellwertschalter 3 gibt an seinem Ausgang dann ein Signal ab, wenn sein Eingangssignal einen bestimmten Wert erreicht hat. Dieser Wert entspricht einem Temperaturwert von beispielsweise 80 °C. Unter dieser Temperatur ist der Signalgenerator 4 abgeschaltet und gibt keine Signale an den Zähler 5 ab.

Bei Erreichen der angegebenen Grenztemperatur beginnt der Signalgenerator 4 zu arbeiten. Er gibt Wechselspannungsausgangssignale, beispielsweise in Form von Impulsen ab, deren Frequenz durch das an seinem zweiten Eingang anliegende Analogsignal bestimmt wird. Je höher die durch den Temperaturfühler 1 gemessene Temperatur ist, um so höher ist die Frequenz des vom Signalgenerator 4 abgegebenen Ausgangssignals. Der an den Signalgenerator 4 angeschlossene Zähler 5 zählt die vom Signalgenerator 4 abgegebenen Impulse oder Wechselspannungswellen und gibt das Zählergebnis an den DA-Wandler 6 ab. Dieser erzeugt ausgangsseitig ein dem Inhalt des Zählers 5 entsprechendes Analogsignal, das dem ersten Eingang des zweiten Schwellwertschalters 7 zugeführt wird. Die Schaltschwelle des Schwellwertschalters 7 läßt sich durch Spannungszufuhr an seinem zweiten Steuereingang durch das Potentiometer 8 einstellen. Erreicht die dem zweiten Schwellwertschalter 7 zugeführte Steuerspannung einen bestimmten Wert, gibt der Schwellwertschalter 7 ein Ausgangssignal an den Tonfrequenzgenerator 9 ab, der den Signalgeber 10 betätigt. Die den Dampfdruckkochtopf bedienende Hausfrau wird durch das akustische Signal darauf aufmerksam gemacht, daß nunmehr der Koch- bzw. Garvorgang beendet ist und der Topf zum Abkühlen vom Herd genommen werden kann.

Das Potentiometer 8 ist vorzugsweise mit einer Skala geeicht, die unmittelbar die für das Koch- oder Gargut zu wählende Normalkoch- oder Garzeit angibt. Die Skala kann auch statt mit der Garzeit mit der Art des zu verwendenden Kochguts, beispielsweise « Kartoffeln, Gemüse, Hülsenfrüchte », beschriftet sein. Der Signalgenerator 4 bleibt bis zum Erreichen einer Aufheiztemperatur von beispielsweise 80 °C außer Funktion und wird erst bei Überschreiten dieser Grenztemperatur durch den Schwellwertschalter 3 aktiviert. Bei dieser Temperatur gibt der Signalgenerator 4 ein Ausgangssignal mit einer Frequenz f ab. Bei weiterem Ansteigen der Temperatur steigt auch die Frequenz des Ausgangssignals des Signalgenerators auf höhere Frequenz $f_1$, $f_2$, $f_3$ ... an. Der Zusammenhang zwischen der gemessenen Temperatur und der vom Signalgenerator 4 abgegebenen Frequenz ist so gewählt, daß der gewünschten Gar- bzw. Kochzeit, die durch erhöhte Temperaturen verursacht wird, gerade Rechnung getragen wird. Entspricht beispielsweise die Einstellung des Potentiometers 8 einer Garzeit für Hülsenfrüchte von 20 Minuten bei einer Kochtemperatur von 110 °C, so gibt der Signalgenerator 4 bei schnellem Erreichen der Temperatur von 110 °C nach dem Aufheizen und anschließendem Konstanthalten der Temperatur ein Ausgangssignal mit einer Frequenz ab, die den zweiten Schwellwertschalter 7 genau nach Ablauf der zwanzigminutigen Kochzeit betätigt. Wird die Temperatur von den angenommenen 110 °C während des Kochvorgangs im Mittel unterschritten, liegt die Ausgangsfrequenz des Ausgangsgenerators unter der mittleren Frequenz und führt zu einer Verlängerung der Kochzeit, und umgekehrt.

Die Ausführungsbeispiele nach den Fig. 2 und 3 stimmen im Prinzip mit denjenigen nach Fig. 1 überein. Es wurden deshalb für gleiche Schaltungsteile auch gleiche Bezugszeichen gewählt. In dem Ausführungsbeispiel nach Fig. 2 ist das die Normalzeit einstellende Potentiometer 8 an einem dritten Eingangsanschluß des Signalgenerators 4 angeschlossen. Dieser Signalgenerator 4 ist so ausgebildet, daß er ein Ausgangssignal mit einer Frequenz abgibt, die von den Analogeingangssignalen an seinem zweiten und dritten Steuereingang abhängt. In diesem Fall braucht zwischen dem Zähler 5 und dem Tonfrequenzgenerator 9 kein zusätzlicher Schwellwertschalter angeordnet zu werden. Es braucht lediglich dafür Sorge getragen zu werden, daß der Zähler 5 bei einem vorgegebenen Zählerinhalt ein Ausgangssignal an den Tonfrequenzgenerator 9 abgibt, der den Signalgeber 10 betätigt.

Das Ausführungsbeispiel nach Fig. 3 entspricht im wesentlichen demjenigen nach Fig. 2. An den Zähler 5 ist ein UND-Verknüpfungsglied 11 mit drei Eingängen angeschlossen, die mit dem Eingang des Zählers 5, seinem Ausgang und dem Ausgang einer astabilen Klippschaltung 12 verbunden sind. Der Ausgang des UND-Verknüpfungsglieds 11 ist über einen Schalter 13 an den Signalgeber 10 angeschlossen. Der Schalter 13 hat einen zweiten Eingang, der mit dem Ausgang des Signalgebers 4 in Verbindung steht. Bei Erreichen des maximalen Zählerstandes im Zähler 5 wird der Schalter 13 durchgeschaltet und leitet die Signale des Signalgenerators 4 unmittelbar auf den Signalgeber 10 jeweils während der Einschaltphasen der astabilen Kippschaltung 12. Dies bewirkt, daß der Signalgeber 10 impulsweise betätigt wird und jeweils ein Ausgangssignal abgibt, das unmittelbar der gemessenen Temperatur entspricht. Die Hausfrau wird dadurch bei hohen Kochtemperaturen darauf aufmerksam gemacht, daß sie sich beeilen muß, den Topf sofort vom Herd zu nehmen, wenn die anliegende Temperatur sehr hoch ist.

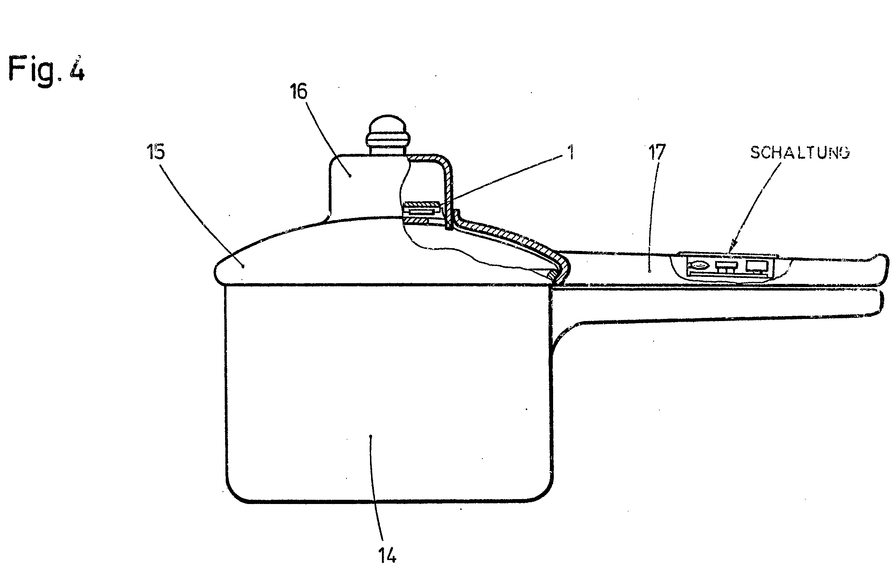

Fig. 4 zeigt in schematischer Darstellung wie eine Schaltung nach den Fig. 1-3 in einem Dampfdruckkochtopf angeordnet werden kann. Der Topf ist nur schematisch dargestellt und besteht aus einem Bodenteil 14 und einem Deckelteil 15. Auf dem Deckelteil 15 sitzt ein Überdruckventil 16, das mit einem Anzeigeelement für den in dem Topf herrschenden Druck versehen ist. In diesem Ventilkörper ist nahe dem Deckelteil 15 der Temperaturfühler 1 angeordnet, der über elektrische Leitungen, die am Deckelteil 15 entlang geführt sind, mit dem Rest der elektrischen Schaltung verbunden ist, die in dem Haltegriff 17 des Deckelteils 15 angeordnet ist. Außer den in den Fig. 1-3 dargestellten Schaltungsteilen enthält die Schaltung noch eine elektrische Energiequelle in Form einer Batterie. Der Signalgeber kann als kleiner Lautsprecher ausgebildet sein. Zur optischen Anzeige kann auch noch ein Anzeigelämpchen im Haltegriff 17 vorgesehen sein.

Die Erfindung ist nicht auf die angegebenen Ausführungsbeispiele beschränkt. Insbesondere muß der Steuerkreis nicht wie in den Fig. 1-3 dargestellt, elektrisch ausgeführt sein, sondern kann auch gänzlich mechanisch realisiert sein. Im Stand der Technik sind bereits Abschaltwerke bekannt, die, wie eingangs angegeben, nach einer vorbestimmten festen und temperaturunabhängigen Zeit eine Warnung abgeben. Mit einem mechanisch arbeitenden Temperatur- oder Druckfühler, beispielsweise einem Bimetallstreifen, oder einer Druckmeßdose, kann dasselbe Ergebnis wie mit den oben beschriebenen Schaltungen erzielt werden, wenn dafür Sorge getragen wird, daß die voreingestellte Zeit in Abhängigkeit von der gemessenen Temperatur oder dem gemessenen Druck variiert wird. Dies kann beispielsweise dadurch erfolgen, daß der mechanische Zeitgeber in Abhängigkeit von den gemessenen Temperatur- bzw. Druckwerten in seinem Zeitablauf gebremst wird oder sonstwie in seiner Geschwindigkeit beeinflußt wird. Je höher der gemessene Druck bzw. die gemessene Temperatur ist, um so weniger stark darf natürlich gebremst werden, da bei hohen Temperaturen und Drucken die Warnung an die Hausfrau früher abgegeben werden muß. Es kann auch ein Zeitschaltwerk verwendet werden, dessen Ablaufgeschwindigkeit abhängt von einer Stellkraft, die unmittelbar aus dem Druck oder der Temperatur hergeleitet werden kann, und das bei höheren Drucken und Temperaturen entsprechend schnell abläuft.

In den in den Fig. 1-3 angegebenen Schaltbeispielen kann das Potentiometer 8 auch ersetzt werden durch ein Stellglied, das den Zähler 5 unmittelbar betätigt und den maximalen Zählerinhalt, bei dessen Erreichen der Signalgeber 10 ansprechen soll, auf die Normalzeit abstellt, bei der bei bestimmter Temperatur (oben wurden dazu 110 °C angegeben) nach den Erfahrungswerten der Hausfrau das im Topf befindliche Gut ausreichend gegart oder gekocht ist. Je länger die Normalzeit ist, um so höher wird der maximale Zählerinhalt festgelegt. Bei überhohen Temperaturen wird dann das Zählergebnis schneller erreicht und der Signalgeber entsprechend früh betätigt. Der Tonfrequenzgenerator kann auch in Wegfall kommen, wenn ein Signalgeber verwendet wird, der unmittelbar auf eine ihm zugeführte Spannung anspricht, beispielsweise eine Klingel oder eine Schnarre.

Als Temperaturfühler läßt sich statt des NTC-Widerstandes auch ein PTC-Widerstand verwenden, wenn die an ihn angeschlossene Schaltung entsprechend ausgebildet ist. Statt eines Temperatursensors kann auch ein Drucksensor verwendet werden, da bei Dampfdruckkochtöpfen die Temperatur und der Druck miteinander unmittelbar zusammenhängen. Es kann auch ein Temperatur und ein Drucksensor gleichzeitig Verwendung finden. Der Signalgenerator kann auf einfache Weise dadurch ausgebildet werden, daß man einen elektrischen Schwingkreis benutzt, dessen Kapazität oder Induktivität unmittelbar durch die Temperatur oder den Druck beeinflußt wird.

## Ansprüche

1. Dampfdruckkochtopf, mit einem topfförmigen Behälter (14) und einem den Behälter dicht abschließenden Deckelteil (15), in dem ein Überdruckventil (16) angeordnet ist, gekennzeichnet durch einen Druck- bzw. Temperatursensor (1) und ein damit in Verbindung stehendes Zeitglied (3, 4, 5), das durch den Druck- bzw. Temperatursensor (1) bei Erreichen einer, gegebenenfalls vorwählbaren Grenztemperatur ausgelöst wird, und das nach Erreichen einer vorgegebenen Garungsstufe eine Anzeige (10) betätigt, wobei die Zeit nach der die Anzeige (10) betätigt wird von den durch den Druck- bzw. Temperatursensor (1) festgestellten Druck- bzw. Temperaturwerten derart beeinflußt wird, daß die Anzeige (10) um so früher betätigt wird, je höher die gemessenen Druck- bzw. Temperaturwerte über den von der Grenztemperatur abhängigen Werten liegen.

2. Dampfdruckkochtopf nach Anspruch 1, dadurch gekennzeichnet, daß das Zeitglied einen Integrator (5) aufweist, der über den zeitlichen Verlauf der Temperatur bzw. des Drucks integriert.

3. Dampfdruckkochtopf nach Anspruch 1 oder 2, dadurch gekennzeichnet, daß der Temperatursensor als NTC-Widerstand (1) ausgebildet ist, und daß der Integrator (5) ein elektrischer Integrator ist.

4. Dampfdruckkochtopf nach Anspruch 2 oder 3, dadurch gekennzeichnet, daß das die Temperatur bzw. den Druck darstellende Signal einem Signalgenerator (4) zugeführt wird, der ein digitales Ausgangssignal mit einer von der Temperatur bzw. dem Druck abhängigen Frequenz liefert, und daß der Integrator als Zähler (5) ausgebildet ist.

5. Dampfdruckkochtopf nach Anspruch 4, dadurch gekennzeichnet, daß der Signalgenerator (4) mit einem Einstellglied (8) verbunden ist, mit dem dessen Grundfrequenz zum Einstellen der bestimmten Zeit festlegbar ist.

6. Dampfdruckkochtopf nach Anspruch 4, dadurch gekennzeichnet, daß der Zähler (5) mit einem Einstellglied (8) verbunden ist, das einen Grenzzählerzustand einstellt, bei dessen Erreichen eine Anzeige betätigt wird.

7. Dampfdruckkochtopf nach einem der Ansprüche 1 bis 7, dadurch gekennzeichnet, daß das Zeitglied einen Schwellwertschalter (3) aufweist, der das Zeitglied erst nach Erreichen eines vorgegebenen Drucks bzw. einer vorgegebenen Temperatur auslöst.

## Claims

1. A pressure cooker comprising a pot-shaped container (14) and a lid portion (15) sealingly closing said container and having a pressure relief valve (16) disposed therein, characterized by a pressure or temperature sensor (1), respectively, and a timing member (3, 4, 5) connected thereto so as to be activated by said pressure or temperature sensor (1), respectively on attaining a preferably selectable limit temperature for actuating an indicator means (10) after a preselected cooked condition has been attained, the time at the end of which said indicator means (10) is actuated being controlled in response to the pressure or temperature values, respectively, sensed by said pressure or temperature sensor (1), respectively, in such a manner that said indicator means (10) is actuated the earlier, the higher the sensed pressure or temperature values, respectively, are above the values determined by said limit temperature.

2. A pressure cooker according to claim 1, characterized in that said timing member comprises an integrator (5) integrating over the temporal development of temperature or pressure, respectively.

3. A pressure cooker according to claim 1 or 2, characterized in that said temperature sensor is in the form of an NTC resistor (1) and in that said integrator (5) is an electrical integrator.

4. A pressure cooker according to claim 2 or 3, characterized in that the signal representing the temperature or pressure, respectively, is applied to a signal generator (4) generating a digital output signal of frequency depending on the temperature or pressure, respectively, and in that said integrator is in the form of a counter (5).

5. A pressure cooker according to claim 4, characterized in that said signal generator (4) is connected to a selector element (8) by means of which its base frequency is adjustable for selecting the specific time.

6. A pressure cooker according to claim 4, characterized in that said counter (5) is connected to a selector element (8) for selecting a counter limit condition on attainment of which an indication means is actuated.

7. A pressure cooker according to any of claims 1 to 7, characterized in that said timing member comprises a thresh-old value switch (3) for activating said timing member only after a preselected pressure, or a preselected temperature, respectively, has been attained.

## Revendications

1. Autocuiseur qui comprend un récipient cylindrique (14) et un couvercle (15) fermant de manière étanche ce récipient et dans lequel est montée une valve de sécurité (16), caractérisé en ce que, par un capteur thermométrique ou manométrique (1) et un organe de temporisation (3, 4, 5), qui est déclenché par le capteur thermométrique ou manométrique (1) lorsqu'une certaine température limite, pouvant le cas échéant être présélectionnée, est atteinte, et après qu'un certain degré de cuisson prédéterminé est atteint, un dispositif de signalisation (10) est actionné, l'arrangement étant tel que le temps après lequel la signalisation (10) est déclenchée par la température ou la pression constatée par le capteur correspondant (1) est influencé de telle manière que la signalisation (10) est actionnée d'autant plus tôt que la température ou la pression mesurée est plus élevée par rapport à la valeur de la température limite.

2. Autocuiseur selon la revendication 1, caractérisé en ce que l'organe de temporisation comporte un intégrateur (5) qui assure l'intégration de l'allure temporelle de la température ou de la pression.

3. Autocuiseur selon la revendication 1 ou 2, caractérisé en ce que le capteur thermométrique est une résistance à coefficient de température négatif (1) et en ce que l'intégrateur (5) est un intégrateur électrique.

4. Autocuiseur selon la revendication 2 ou 3, caractérisé en ce que le signal représentant la température ou la pression est appliqué à un générateur de signaux (4) qui délivre un signal de sortie numérique dont la fréquence est fonction de la température ou de la pression et en ce que l'intégrateur est réalisé comme un compteur (5).

5. Autocuiseur selon la revendication 4, caractérisé en ce que le générateur de signaux (4) est relié à un organe de réglage (8) au moyen duquel peut être fixée sa fréquence de base afin de régler le temps déterminé.

6. Autocuiseur selon la revendication 4, caractérisé en ce que le compteur (5) est relié à un organe de réglage (8) qui règle le compteur sur un compte limite ou sur un total qui, lorsqu'il est atteint, provoque l'actionnement d'un dispositif de signalisation.

7. Autocuiseur selon l'une quelconque des revendications 1 à 7, caractérisé en ce que l'organe de temporisation comporte un commutateur à seuil (3) qui ne déclenche l'organe de temporisation que lorsqu'une pression ou une température prédéterminée a été atteinte.

Fig.1

Fig.2

Fig.3

Fig. 4

SCHALTUNG

16

15

1

17

14

0 023 724